# EUROPEAN PATENT SPECIFICATION

(11) **EP 2 487 937 B1**
(45) Date of publication and mention of the grant of the patent: **24.08.2016**
(21) Application number: 10823030.1
(22) Date of filing: 09.09.2010
(51) Int. Cl.: H04W 4/08, H04W 8/18, H04W 4/06, H04W 48/18, H04W 76/02

(54) **METHOD, DEVICE AND COMMUNICATION SYSTEM FOR GROUP CALL**
VERFAHREN, VORRICHTUNG UND KOMMUNIKATIONSSYSTEM FÜR GRUPPENRUFE
PROCÉDÉ, DISPOSITIF ET SYSTÈME DE COMMUNICATION POUR APPEL GROUPÉ

(30) Priority: 12.10.2009 CN 200910235686
(43) Date of publication of application: 15.08.2012
(73) Proprietor: Huawei Technologies Co., Ltd., Longgang District Shenzhen, Guangdong 518129 (CN)
(72) Inventor: SHEN, Minjun, Shenzhen, Guangdong 518129 (CN); YANG, Yanping, Shenzhen, Guangdong 518129 (CN); SHU, Bing, Shenzhen, Guangdong 518129 (CN)
(74) Representative: Thun, Clemens
(86) International application number: PCT/CN2010/076744
(87) International publication number: WO 2011/044800

(56) References cited:
- EP-A1- 1 755 349
- EP-A1- 1 881 714
- WO-A1-2008/012264
- CN-A- 1 867 117
- CN-A- 1 968 458
- "3rd Generation Partnership Project; Technical Specification Group Core Network and Terminals; Voice Broadcast Service (VBS); Stage 2 (Release 8)", 3GPP STANDARD; 3GPP TS 43.069, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 March 2008 (2008-03-01), pages 1-80, XP050378273,
- "3rd Generation Partnership Project; Technical Specification Group Core Network and Terminals; Voice Group Call Service (VGCS); Stage 2 (Release 8)", 3GPP STANDARD; 3GPP TS 43.068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.0, 1 June 2008 (2008-06-01), pages 1-163, XP050378242,
- SIEMENS AG: "Interoperability between Voice Group Call Service (VGCS) / Voice Broadcast Service (VBS) and Intra-domain connection of Radio Access Network (RAN) nodes to multiple Core Network (CN) nodes (RANflex)", 3GPP DRAFT; C1-060245-DISC-VGCS-VBS-RANFLEX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Denver, USA; 20060206, 6 February 2006 (2006-02-06), XP050022296, [retrieved on 2006-02-06]

## Description

### FIELD OF THE INVENTION

The present invention relates to communications technologies, and in particular, to a method, an apparatus, and a communication system for a group call.

### BACKGROUND OF THE INVENTION

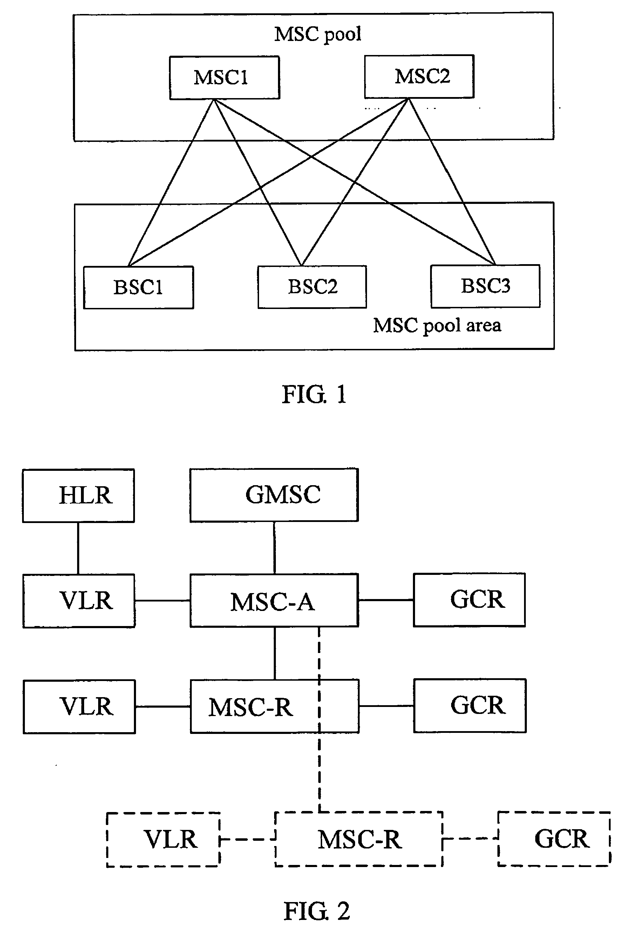

In a traditional mobile communication network, a base station controller (Base Station Controller, BSC for short) can only be connected with one mobile switching center (Mobile Switching Center, MSC for short). In an MSC pool (MSC POOL) network, however, a BSC may be connected with all MSCs in the pool. FIG 1 shows a schematic structure diagram of a network of an MSC pool in the prior art. These MSCs form an MSC pool, and meanwhile, areas served by the BSCs that are connected with the pool form an MSC pool area. That is to say, an MSC pool area is formed by all location areas (Location Area, LA for short) of one or more BSCs served by a group of MSCs jointly. This group of MSCs forms an MSC pool.

In an MSC pool, for a point-to-point call, if one MSC fails, other MSCs in the MSC pool may be used as standby MSCs to implement a disaster recovery mechanism.

A group call includes a voice group call service (Voice Group Call Service, VGCS for short) and a voice broadcast service (Voice Broadcast Service, VBS for short).

A group call method based on an MSC pool in the prior art is as follows. A fixed MSC is set in the MSC pool as an anchor MSC (Anchor MSC, MSC-A for short) or a relay MSC (Relay MSC, MSC-R for short) of a group call. Through the MSC-A or MSC-R, the group call is implemented. In an MSC pool, a mobile station (Mobile Station, MS for short) may be registered onto any MSC, and the MSC on which the MS is registered is called a visit MSC (Visit MSC, VMSC for short). When the MS initiates a group call, if the VMSC is neither an MSC-A nor an MSC-R, because each MSC in the MSC pool stores a corresponding relationship between a LAC and a serving MSC, the VMSC may find the serving MSC (Serving MSC) of the group call corresponding to the LAC where the MS is located. The VMSC sends a "Send_Group_Call_Info" message (Send_Group_Call_Info) to the serving MSC, so as to obtain the MSC-A of the group call, and then sends a SETUP message to the MSC-A. Afterward, according to a normal group call initiation procedure, the MSC-A notifies each MSC-R of setting up a group call, sets up a group call channel for the group call, and finally, sends a Connect message (Connect) to the MS that initiates the group call, and the MS may speak as a speaker of the group call.

In the group call system based on an MSC pool in the prior art, a fixed MSC is set in the MSC pool as an MSC-A or an MSC-R. The MSC-A and the MSC-R serve the group call. The MSC-A or MSC-R is called a serving MSC. When the MSC-A or MSC-R fails, the group call cannot be performed. Therefore, the group call supporting the MSC pool does not implement disaster recovery of the group call MSC, and, in a sense, the function of the redundancy security assurance of the MSC pool is lost.

The document "3rd Generation Partnership Project; Technical Specification Group Core Network and Terminals; Voice Broadcast Service (VBS); Stage 2 (Release 8)", 3GPP STANDARD; 3GPP TS 43.069, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, (20080301), no. V8.1.0, PAGE 1 - 80, XP050378273 relates to the Technical Specification Group of Core Network and Terminals. Specially, the standard relates to the technology of Voice Broadcast Service (VBS).

### SUMMARY OF THE INVENTION

An embodiment of the present invention provides a method, an apparatus, and a communication system for a group call.

An embodiment of the present invention provides a method for a group call, including:
receiving, by a mobile switching center (MSC), request information for setting up a group call from a mobile station MS, where the MSC forms part of an MSC pool and and is an MSC that is selected by a base station controller (BSC) from any MSC that works normally in the MSC pool; and
serving, by the MSC, the group call, by the MSC according to the request information, where the MSC is connected with a group call register GCR which includes attribute information of the group call; the attribute information includes a list of MSCs in the MSC pool and the list of MSCs indicates that any MSC in the MSC pool may serve as a serving MSC for serving the group call as an anchor MSC in the MSC pool or a relay MSC in the MSC pool;
where the method further includes:
sending, by the MSC, the attribute information of the group call to one or more other MSCs except the MSC itself in the MSC pool, so that GCRs connected with the one or more other MSCs update the attribute information of the group call.

An embodiment of the present invention further provides an MSC, including:
a second receiving module, configured to receive request information for setting up a group call from a mobile station MS; and
a second processing module, configured to call service for the group call according to the request information received by the second receiving module;
where the MSC is for an MSC pool and is configured to be selected by a base station controller (BSC) from any MSC that works normally in the MSC pool;
where the MSC is configured to be connected with a group call register, GCR, which includes attribute information of the group call, and the attribute information comprises a list of MSCs in the MSC pool and the list of MSCs indicates that any MSC for the MSC pool may serve as a serving MSC for serving the group call as an anchor MSC for the MSC pool or a relay MSC for the MSC pool;
further including:
a second sending module, configured to send the attribute information of the group call to one or more other MSCs except the MSC itself in the MSC pool, so that group call registers, GCRs, connected with the one or more other MSCs update the attribute information of the group call.

An embodiment of the present invention provides a communication system where at least two MSC of the above mentioned MSC and at least two group call registers, GCRs, wherein each MSC in the at least two MSCs is connected with a GCR in the at least two GCRs respectively.

In the embodiments of the present invention, each MSC in the MSC pool has the function of being that may be used as a serving MSC that serves the group call, or the MSC pool includes at least two MSCs that may be used as serving MSCs; and the MS may initiate a group call through any MSC in the MSC pool or through one of the at least two MSCs that may be used as serving MSCs. In this way, if the serving MSC that currently serves the group call fails, the group call may also be enabled through one or more other MSCs in the MSC pool, thereby improving the disaster recovery capability of the group call system based on the MSC pool.

### BRIEF DESCRIPTION OF THE DRAWINGS

FIG. 1 is a schematic diagram of a network structure of an MSC pool in the prior art;
FIG. 2 is a schematic structure diagram of a core network of a group call communication system in the prior art;
FIG. 3 is a schematic structure diagram of a group call system based on an MSC pool in the prior art;
FIG. 4 is a flowchart of a method for serving a group call according to a first embodiment of the present invention;
FIG. 5a is a flowchart of a mode of sending attribute information related to a group call according to an embodiment of the present invention;
FIG. 5b is a flowchart of another mode of sending attribute information related to a group call according to an embodiment of the present invention;
FIG. 5c is a flowchart of another mode of sending attribute information related to a group call according to an embodiment of the present invention;
FIG. 6 is a flowchart of a group call method according to a second embodiment of the present invention;
FIG. 7 is a flowchart of a group call method according to a third embodiment of the present invention;
FIG. 8 is a flowchart of a group call method according to a fourth embodiment of the present invention;
FIG. 9 is a schematic structure diagram of an MSC according to a first embodiment of the present invention;
FIG. 10 is a schematic structure diagram of an MSC according to a second embodiment of the present invention; and
FIG 11 is a schematic structure diagram of a BSC according to an embodiment of the present invention.

### DETAILED DESCRIPTION OF THE EMBODIMENTS

FIG 2 is a schematic structure diagram of a core network of a group call communication system in the prior art. A home location register (Home Location Register, HLR for short) stores user information, including an international mobile subscriber identifier (International Mobile Subscriber Identity, IMSI for short) of the user, and a list of IDs of groups to which the user belongs (a user may belong to at most 50 groups). A gateway mobile switching center (Gateway Mobile Switch Center, GMSC for short) is connected with an external network and an anchor MSC (Anchor MSC, MSC-A for short). The MSC-A is responsible for managing and maintaining a specific VGCS/VBS.

A relay MSC (Relay MSC, MSC-R for short) is any MSC except the MSC-A when the group call area traverses multiple MSCs. A one-to-many tree relationship exists between the MSC-A and the MSC-R. A visited location register (Visited Location Register, VLR for short) stores the IMSI of the user and a list of IDs of the groups to which the user belongs. When the user is roaming, such information may be acquired from the HLR.

A group call register (Group Call Register, GCR for short) includes the group ID and the group call area. A combination of the group call area and the group ID is called group call reference. The GCR that is connected with the MSC-A includes such information as a list of schedulers related to the group call reference, an MSC-R list, a serving cell list, inactive time limit, priority, status flag, response flag, encryption algorithm, and group key. However, the GCR that is connected with the MSC-R includes an MSC-A list related to the group call reference, and a list of cells controlled by the MSC-R. In the group call process, the GCR also records some temporary attributes of the group call, and these temporary attributes are deleted after completion of the group call. These temporary data includes: IMSI of the initiating user, the speaker priority of the initiating user, other information about the initiating user, and the ID of the initiating cell.

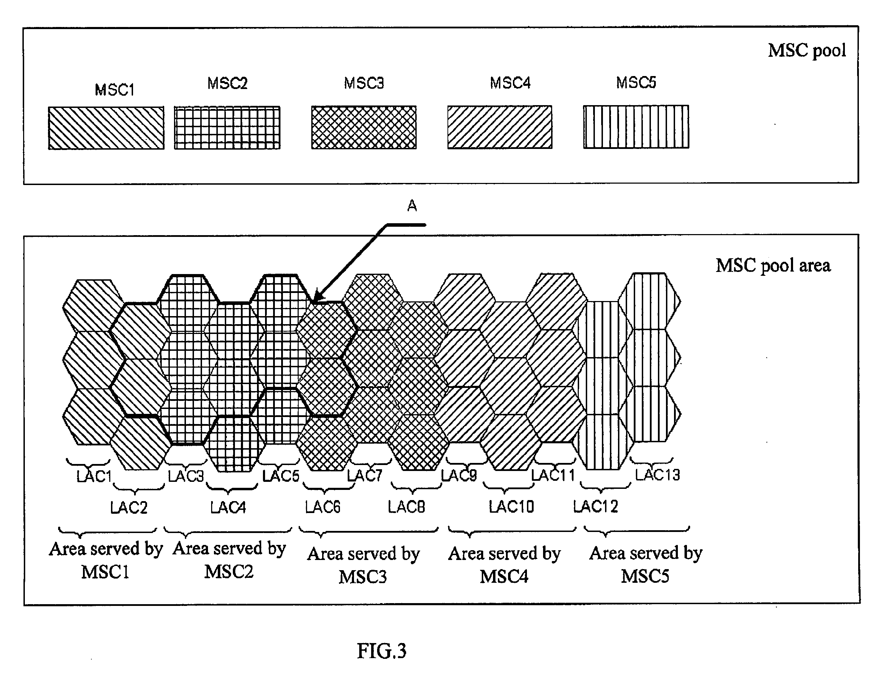

The prior art presently already supports coexistence of the group call and the MSC pool. FIG. 3 is a schematic structure diagram of a group call system based on an MSC pool in the prior art. The system includes an MSC pool and an MSC pool area. The MSC pool includes an MSC-A and an MSC-R that are configured to serve the group call, and MSCs that do not serve the group call (for example, these MSCs that do not serve the truck call may serve point-to-point calls). In FIG 3, MSC1 and MSC3 are MSC-Rs, MS2 is MSC-A, and MSC4 and MSC5 are MSCs that serve non-group calls. The MSC pool area includes cells (right hexagons in FIG 3 represent cells). Each cell has a different location area code (Location Area Code, LAC for short), and different LACs belong to different MSCs. In an MSC pool area, multiple cells make up a group call area (such as area A in FIG. 3). A group call may be initiated in the group call area.

In an embodiment of the present invention, for an existing problem in the group call system based on the MSC pool, the MSC pool may be set in a first setting mode and in a second setting mode.

The first setting mode is as follows:

In an MSC pool, every MSC is set as having functions of a serving MSC that serves the group call.

In the embodiment of the present invention, the term "serving MSC" may be understood as an anchor MSC (MSC-A) that serves a group call in an MSC pool. The term "serving MSC" may also be understood as a relay MSC (MSC-R) that serves a group call in an MSC pool.

For a group call in the case that the group call area is in an MSC pool area, every MSC in the MSC pool may be set as an MSC that has functions of an MSC-A that serves the group call. Every MSC in the MSC pool can serve as both a registering MSC of the MS and an MSC-A that serves the group call. That is to say, every MSC in the MSC pool has the functions of an MSC-A, and the GCRs connected with each MSC in the MSC pool have the same configuration. Each GCR includes attribute information of a group call. The attribute information is used to enable any MSC in the MSC poll to have functions of a serving MSC that serves the group call. In each embodiment of the present invention, the group call in an MSC pool area refers to part or all of the group calls in the overlap between the group call area and the MSC pool area.

For a group call in the case that the group call area traverses an MSC pool area, every MSC in the MSC pool may be set as an MSC that has functions of an MSC-A or an MSC-R that serves the group call, and every GCR that is connected with an MSC in the MSC pool has the same configuration. Each GCR includes attribute information of a group call. The attribute information is used to enable any MSC in the MSC pool to have functions of a serving MSC that serves the group call. In the case that the group call is initiated across an MSC pool, if the MSC outside the MSC pool is configured as MSC-A, each MSC in the MSC pool is set as an MSC that has the functions of an MSC-R; if the MSC outside the MSC pool is configured as MSC-R, each MSC in the MSC pool is set as an MSC that has functions of an MSC-A. The MSCs in the MSC pool and the serving MSC outside the MSC pool serve the group call together.

In a word, every MSC in the pool may serve the group call in the pool. The group call in an MSC pool area refers to part or all of the group calls in the overlap between the group call area and the MSC pool area. For different group calls, the MSC may be set as an MSC-A or an MSC-R.

The attribute information of a group call is the information that reflects the attribute of the group call in an MSC pool. The attribute information of a group call allowed in an MSC pool may be preset. Therefore, the GCR that is connected with each MSC may store the attribute information of one or more group calls related to the MSC pool area.

In an embodiment of the present invention, the attribute information of a group call may include a list of MSCs. If the GCRs connected with any MSC in an MSC pool have the same MSC list, and the MSC list indicates that the MSC in the MSC pool may be a relay MSC that serves a group call, or the MSC list indicates that the MSC in the MSC pool may be an anchor MSC that serves a group call, that is, any MSC in the MSC pool may serve as a serving MSC that serves the group call.

In an embodiment of the present invention, the attribute information of a group call may further include such information as a group identifier and a group call area. The group identifier includes the number of users allowed by the group call and a user identifier. The attribute information of a group call allowed in an MSC pool may be preset. The attribute information is preset in a GCR, and may be known as basic attribute information in the embodiment of the present invention. The attribute information of a group call may further include some dynamic data generated in a group call period, such as location of the speaker of the current group call and user identifier of the speaker of the current group call. Therefore, in a group call process, the attribute information of a group call may be updated. Such dynamic data generated in a group call period is known as dynamic attribute information in the embodiment of the present invention. Therefore, in order that any MSC in an MSC pool may be served as a serving MSC that serves the group call, not only the MSC list is the same, but also other attribute information of a group call in every GCR may be set as the same.

Therefore, in the embodiment of the present invention, in order to enable any MSC in an MSC pool to have functions of a serving MSC that serves the group call, the attribute information of a group call in any GCR in the MSC pool may be set as the same. The attribute information may be understood as a list of MSCs existent in any GCR in the MSC pool with regard to the group call, or the attribute information may further be understood as other attribute information in addition to the list of MSCs.

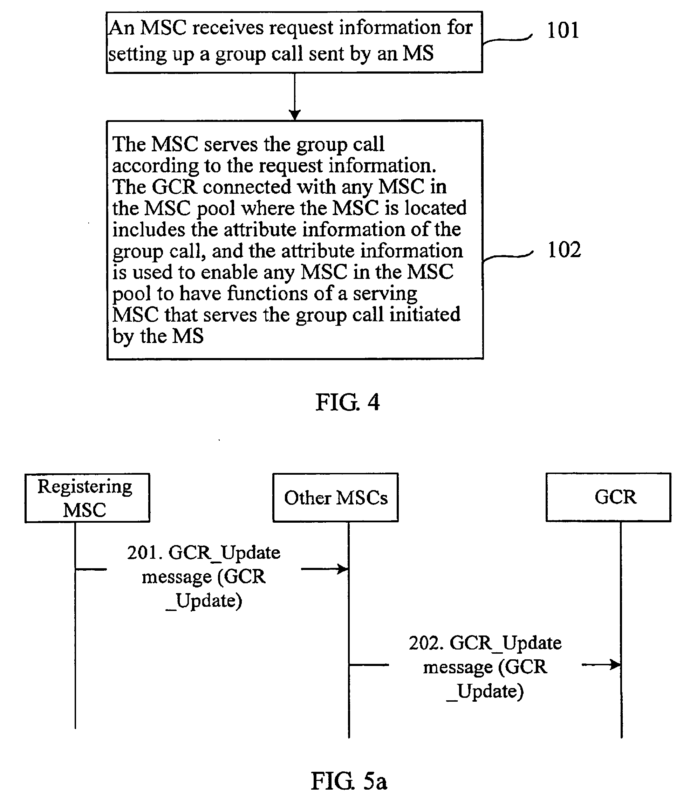

FIG 4 is a flowchart of a method for serving a group call according to a first embodiment of the present invention, which includes:
101. An MSC receives request information for setting up a group call from an MS, where the MSC is located in an MSC pool.

102. The MSC serves the group call according to the request information. The GCR that is connected with any MSC in the MSC pool that includes attribute information of the group call, and the attribute information is used to enable any MSC in the MSC pool to have functions of a serving MSC that serves the group call initiated by the MS.

During the operation period of the group call, the MSC may serve as a unique serving MSC during the operation period of the group call, and meanwhile, the MSC may further provide group call services for one or more other users of the group call in the MSC pool.

In the first embodiment of the group call method of the present invention, because every MSC has functions of a serving MSC that serves the group call initiated by the MS, the MS may be registered onto any MSC, and may initiate a group call through the registering MSC. If the registering MSC fails, the MS may select another MSC for registering again, and initiates a group call again, without the need of waiting for recovery of the failed MSC. Compared with the prior art, the method in this embodiment can overcome a problem that the disaster recovery capability of the group call system based on an MSC pool is low because the GCRs that is connected with the serving MSCs store different data.

Further, in the first embodiment of the group call method, because the MS may select any MSC as a registering MSC and initiate a group call, the BSC that serves the MS may select an MSC as a registering MSC of the MS based on a load sharing mechanism. In this way, the load can be balanced for the entire MSC pool.

In the MSC pool, when the registering MSC of the MS fails, the MS may get registered onto a new MSC again. The new MSC serves as a unique serving MSC to serve the group call newly initiated by the MS.

If the registering MSC of the MS fails before the MS initiates the group call, the MS may get registered on any other MSC that works normally in the MSC pool.

The following describes the process of implementing the first embodiment of the group call method in detail.

When the MS roams to an MSC pool area, the BSC selects an MSC for the MS based on a load sharing mechanism, and the MS gets registered onto the MSC selected by the BSC. Because the MSC is selected by the BSC for the MS, the selection of a failed MSC is avoided. If the MS needs to initiate a group call, because any MSC in the MSC pool has the functions of a serving MSC, the MS initiates a group call by getting registered onto the MSC. The registering MSC of the MS is the serving MSC of the current group call. Because the functions of the VMSC and the serving MSC are implemented in one MSC, the step of the VMSC selecting a serving MSC according to a table of mapping between the LAC and the MSC in the prior art may be omitted, and thereby the signaling interaction between the MSCs is reduced when the MSC pool initiates a group call. If the registering MSC of the MS fails after the MS is registered onto an MSC and before the MS initiates a group call, the MS gets registered onto any other MSC again that works normally in the MSC pool. After the MS initiates the group call, if the serving MSC of the current group call fails, the BSC that is connected with the serving MSC of the current group call selects any other MSC that works normally in the MSC pool, and uses the selected MSC as a unique serving MSC during the operation period of the re-initiated group call. Subsequently, the MS may initiate a group call through the selected MSC that works normally. The method of the MS initiating a group call subsequently is covered in the prior art, and is not detailed here any further.

In each embodiment of the present invention, the failure of the MSC may specifically include MSC breakdown, MSC out-of-service caused by maintenance, and A-interface disconnection.

The first embodiment of the group call method may further include the following: The registering MSC sends the attribute information of the group call initiated by the MS to one or more other MSCs except the registering MSC itself in the MSC pool, so that the GCRs connected with one or more other MSCs update the attribute information related to the group call initiated by the MS.

The attribute information of the group call initiated by the MS is sent to one or more other MSCs except the registering MSC itself in the MSC pool, so that the GCRs connected with one or more other MSCs update the attribute information of the group call initiated by the MS. In this way, the attribute information of the group call in the GCRs that are connected with one or more other MSCs is the latest, and any MSC in the MSC pool can provide the latest attribute information of the group call.

Assuming a scenario is that: an MS roams to an MSC pool area, and the MS is registered onto an MSC; at this time, a VGCS is already initiated in the MSC pool, and the MS is just a member of the group call, and therefore, the MS joins the group call, and the MSC-A performs the group call service for the MS. After the MS contends for the channel and becomes a speaker, the MS roams out of the MSC pool. At this time, the MSC outside the MSC pool needs to obtain the user data of the MS from the current registering MSC. The user data includes the attribute information of the group call existent when the MS initiates the group call. The attribute information of the group call is stored in the MSC-A. The current registering MSC of the MS does not store the attribute information of the group call existent when the MS initiates the group call, which may cause that the network side cannot provide the group call service when the MS is roaming.

It can be seen that, in such a scenario, if the current registering MSC of the MS does not have the attribute information of the group call initiated by the MS, the group call service cannot be provided for the roaming MS. If the attribute information of the group call initiated by the MS is sent to one or more other MSCs except the registering MSC itself in the MSC pool, for example, the attribute information of the group call initiated by the MS is sent once at every other fixed period, then the foregoing problem may be avoided.

The registering MSC sends the attribute information related to the group call to one or more other MSCs except the registering MSC itself in the MSC pool, and several modes in the following may be specifically included:
Mode 1: The registering MSC sends the attribute information of the group call to one or more other MSCs except the registering MSC in the MSC pool.
Mode 2: Any BSC connected with the registering MSC sends the attribute information of the group call to one or more other MSCs except the registering MSC in the MSC pool.
Mode 3: A BSC specified by an operations & maintenance center (Operations & Maintenance Center, OMC for short) sends the attribute information of the group call to one or more other MSCs except the registering MSC in the MSC pool.
Mode 4: The OMC sends the attribute information of the group call to one or more other MSCs except the registering MSC in the MSC pool. The OMC is configured to operate and maintain each functional entity in the system.

The following describes several modes of sending the attribute information related to the group call in detail.

FIG. 5a is a flowchart of a mode of sending attribute information related to a group call according to an embodiment of the present invention, which includes:
201. The registering MSC sends the attribute information of the group call to one or more other MSCsin the MSC pool through broadcast. The attribute information of the group call attribute may be carried in a GCR_Update message.

202. One or more other MSCsin the MSC pool send the received attribute information of the group call to the GCRs connected with them respectively. Each GCR updates the stored attribute information of the group call according to the received attribute information of the group call. Specifically, the attribute information of the group call sent by the MSC to the GCR may also be carried in a GCR_Update message (GCR_Update).

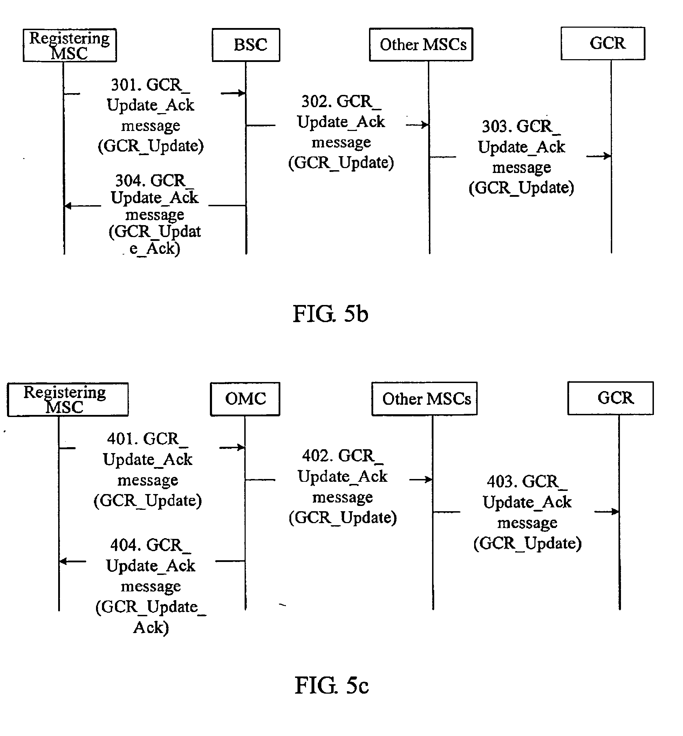

FIG 5b is a flowchart of another mode of sending attribute information related to a group call according to an embodiment of the present invention, which includes:
301. The registering MSC sends the attribute information of the group call to any BSC that is connected with the registering MSC. The attribute information of the group call sent by the registering MSC to the BSC may be carried in a GCR_Update message (GCR_Update).

302. The BSC sends the GCR_Update message (GCR_Update) to one or more other MSCs except the registering MSC in the MSC pool.

303. One or more other MSCs in the MSC pool send the GCR_Update message (GCR_Update) to the GCR that is connected with them respectively, so that the GCR updates the stored attribute information of the group call according to the received attribute information of the group call.

304. The BSC sends a GCR_Update_Ack message (GCR_Update_Ack) to the registering MSC.

FIG. 5c is a flowchart of yet another mode of sending attribute information related to a group call according to an embodiment of the present invention, which includes:
401. The registering MSC sends the attribute information of the group call to an OMC through broadcast. The attribute information of the group call sent by the registering MSC to the OMC may be carried in a GCR_Update message (GCR_Update).

402. The OMC sends the GCR_Update message (GCR_Update) to one or more other MSCs except the registering MSC in the MSC pool. Specifically, the OMC judges that one or more other MSCs in the MSC pool start up successfully, and sends the GCR_Update message to (GCR_Update) one or more other MSCs.

403. One or more other MSCs except the registering MSC in the MSC pool send the GCR_Update message to the GCRs connected with them respectively. Each GCR updates the stored attribute information of the group call according to the attribute information of the group call in the received GCR_Update message (GCR_Update).

404. The OMC sends a GCR_Update_Ack message (GCR_Update_Ack) to the registering MSC.

In an MSC pool, after an MSC is restarted, the GCR that is connected with the MSC may lose the previously stored attribute information of the group call. After starting up successfully, one or more other MSCs in the MSC pool may accordingly obtain the latest attribute information of the group call from the registering MSC of the MS, or any BSC connected with the registering MSC, or a BSC specified by the OMC, or the OMC.

In the foregoing several modes of sending the attribute information related to the group call, if the attribute information of the group call includes the basic attribute information of the group call and the dynamic attribute information generated in the group call period, the GCR that is connected with each MSC may substitute the received attribute information of the group call for the stored attribute information of the group call directly. If the attribute information of the group call is the dynamic attribute information generated in the group call period, the GCR that is connected with each MSC may substitute the received dynamic attribute information of the group call for the stored dynamic attribute information of the group call directly, and keep the basic attribute information of the group call unchanged.

The second setting mode is as follows:

In an MSC pool, at least two MSCs are set as the MSCs that may be used as serving MSCs.

For a group call in the case that the group call area is included in the MSC pool area, the serving MSC may be set as an MSC that has functions of an MSC-A. That is to say, every serving MSC in the MSC pool has the functions of an MSC-A, and every GCR that is connected with each serving MSC stores the attribute information of the group call. The attribute information is used to enable any MSC in at least two MSCs that may be used as serving MSCs to have functions of a serving MSC that serves the group call.

For a group call in the case that the group call area traverses the MSC pool area, the serving MSC may be set as an MSC that has functions of an MSC-A or an MSC-R. That is to say, every serving MSC in the MSC pool has the functions of an MSC-A or an MSC-R, and every GCR that is connected with a serving MSC has the attribute information of the group call. The attribute information is used to enable any MSC in at least two MSCs that may be used as serving MSCs to have functions of a serving MSC that serves the group call. In the case that the group call is initiated across an MSC pool, if the MSC outside the MSC pool is set as an MSC-A, every serving MSC in the MSC pool is set as an MSC that has functions of an MSC-R; if the MSC outside the MSC pool is set as an MSC-R, every serving MSC in the MSC pool is set as an MSC that has functions of an MSC-A. The serving MSCs in the MSC pool and the serving MSCs outside the MSC pool serve the group call together.

In a word, every serving MSC in the pool may serve the group call in the pool. The group call in an MSC pool area refers to a part or all of the group calls in the overlap between the group call area and the MSC pool area. For different group calls, the MSC may be set as an MSC-A or an MSC-R.

For this setting mode, at least two MSCs that may be used as serving MSCs in the MSC pool may be differentiated by priority, and a list of priority levels of the at least two MSCs that may be used as serving MSCs in an MSC pool may be stored in each MSC in the MSC pool, or stored in the BSC. The list of priority levels of the at least two MSCs that may be used as serving MSCs includes information about order of priority of the serving MSCs and information about the status of each serving MSC. The status information of an MSC may include such information as "failed" or "normal", and the priority levels may also be ranked in other modes.

The first setting mode differs from the second setting mode in that: in the first setting mode, all MSCs in the MSC pool are set as serving MSCs, and therefore, any MSC in the MSC pool may be used as an MSC that serves the group call, for example, MSC1 may serve a first group call, MSC2 may serve a second group call, and MSC3 may serve a third group call, where the first group call, the second group call, and the third group call may exist at the same time; in the second setting mode, at least two MSCs in the MSC pool are set as serving MSCs, and at any time, only one serving MSC in the MSC pool is responsible for serving the group calls in the MSC pool, and no other serving MSC may be used as a serving MSC until the current serving MSC fail, for example, MSC1 and MSC2 are set as serving MSCs in the MSC pool. Assuming that MSC1 is selected as a unique serving MSC that serves the group calls in the MSC pool currently, and assuming that three group calls are initiated in the MSC pool and are all served by MSC1, MSC2 is not selected as a serving MSC until MSC1 fails.

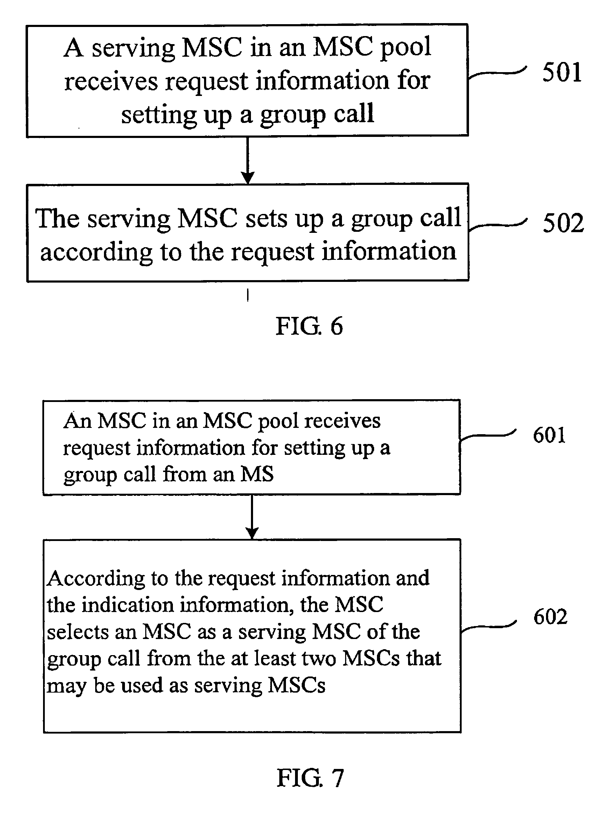

FIG. 6 is a flowchart of a group call method according to a second embodiment of the present invention, which includes:
501. A serving MSC in an MSC pool receives request information for setting up a group call, where the MSC pool includes at least two MSCs that may be used as serving MSCs, and any MSC in the MSC pool includes indication information indicating that an MSC needs to be selected as a serving MSC from the at least two MSCs that may be used as serving MSCs.

502. The serving MSC sets up a group call according to the request message. A GCR that is connected with any MSC in the at least two MSCs that may be used as serving MSCs stores the attribute information of the group call. The attribute information is used to enable any MSC in the at least two MSCs that may be used as serving MSCs to have functions of a serving MSC that serves the group call, and the serving MSC is an anchor MSC in the MSC pool or the serving MSC is a relay MSC in the MSC pool.

FIG 7 is a flowchart of a group call method according to a third embodiment of the present invention, which includes:

601. An MSC in an MSC pool receives request information for setting up a group call from an MS, where the MSC pool includes at least two MSCs that maybe used as serving MSCs, and any MSC in the MSC pool includes indication information indicating that an MSC needs to be selected as a serving MSC from the at least two MSCs that may be used as serving MSCs.

602. The MSC selects an MSC as a serving MSC of the group call from the at least two MSCs that may be used as serving MSCs according to the request information and the indication information, where a GCR that is connected with any MSC in the at least two MSCs that may be used as serving MSCs stores attribute information of the group call. The attribute information is used to enable any MSC in the at least two MSCs that may be used as serving MSCs to have functions of a serving MSC that serves the group call, and the serving MSC is an anchor MSC in the MSC pool or the serving MSC is a relay MSC in the MSC pool.

In the third embodiment of the group call method of the present invention, the serving MSC in the MSC pool serves the group call. In this way, the currently selected serving MSC is never the failed MSC. Such a mode of selecting the serving MSC may improve the disaster recovery capability of the group call system based on the MSC pool.

If the currently selected serving MSC fails, the MSC may select another serving MSC except the failed serving MSC in the MSC pool to act as the serving MSC of the group call. Unlike in the prior art where an MSC-A serves only certain group calls, every serving MSC in this embodiment of the present invention may serve group calls. In this way" even if a certain serving MSC fails, one or more other serving MSCs may also serve the group calls, without waiting for recovery of a certain failed serving MSC.

In the third embodiment of the group call method, the indication information may be a list of priority levels of at least two MSCs that may be used as serving MSCs, or may be a preset selection mechanism.

If the indication information is a list of priority levels of the at least two MSCs that may be used as serving MSCs, an MSC selecting an MSC as a serving MSC of the group call from the at least two MSCs that may be used as serving MSCs in 602 may include the following: The MSC selects a normally working MSC of the highest priority level as the serving MSC of the group call from the list of priority of the at least two MSCs that may be used as serving MSCs.

If the serving MSC currently selected by the MSC for serving the group call fails, the MSC selects a normally working MSC of the highest priority level as the serving MSC of the group call from the list of priority levels of the at least two MSCs that may be used as serving MSCs.

The BSC connected with the failed serving MSC of the group call, the BSC specified by the OMC, or the OMC may send the fault information to the MSCs except the failed serving MSC of the group call in the MSC pool, so that one or more other MSCs update their respective lists of priority levels of the at least two MSCs that may be used as serving MSCs; or the BSC connected with the failed serving MSC of the group call, the BSC specified by the OMC, or the OMC sends the current list of priority levels of the at least two MSCs that may be used as serving MSCs to the MSCs except the failed serving MSC of the group call in the MSC pool.

For example, any BSC connected with the failed serving MSC, the BSC specified by the OMC, or the OMC may send an MSCs_Status_Update message (MSCs_Status_Update) to the MSCs except the failed serving MSC in the MSC pool, where the MSCs_Status_Update message (MSCs_Status_Update) includes status information of the failed serving MSC, and in this way, one or more other MSCs may update their respective lists of priority levels of the at least two MSCs that may be used as serving MSCs. Alternatively, any BSC connected with the failed serving MSC, the BSC specified by the OMC, or the OMC may directly send the current list of priority levels of the at least two MSCs that may be used as serving MSCs (namely, the latest list of priority levels of the at least two MSCs that may be used as serving MSCs) to one or more other MSCs in the MSC pool. After receiving the list of priority levels of the at least two MSCs that may be used as serving MSCs, one or more other MSCs overwrite the stored list of priority levels of the at least two MSCs that may be used as serving MSCs, thereby implementing that the list of priority levels of the at least two MSCs that may be used as serving MSCs is updated.

If the indication information is a preset selection mechanism, an MSC selecting an MSC as a serving MSC of the group call from the at least two MSCs that may be used as serving MSCs in 602 may include the following: According to the preset selection mechanism, the MSC selects an MSC as a serving MSC of the group call from the at least two MSCs that may be used as serving MSCs.

For example, three MSCs exist in the MSC pool, namely, MSC1, MSC2, and MSC3 respectively, and the MSC may select the serving MSC according to the preset selection rule. For example, the preset selection mechanism may include: selecting MSC1 as a unique serving MSC first; and, if MSC1 fails, selecting MSC3 as a unique serving MSC. The specific selection rule may be determined according to actual conditions of the network.

If the serving MSC currently selected by the MSC for the group call fails, the MSC may select a normally working MSC as a servering MSC of the group call from at least two MSCs that may be used as serving MSCs according to the preset selection mechanism.

The BSC connected with the failed serving MSC of the group call, the BSC specified by the OMC, or the OMC may send the fault information to one or more other MSCs except the failed serving MSC of the group call in the MSC pool.

The BSC connected with the failed serving MSC of the group call, the BSC specified by the OMC, or the OMC may send the information about the serving MSC currently selected by the MSC for the group call to one or more other MSCs except the failed serving MSC of the group call in the MSC pool.

After the serving MSC is selected, the information about the current serving MSC may be sent to one or more other MSCs in the MSC pool. In this way, one or more other MSCs (including the serving MSCs and non-serving MSCs) in the MSC pool may know the current serving MSC. For other non-serving MSCs, the group call cannot be initiated properly unless the current serving MSC is known.

In the MSC pool, the list of priority levels of at least two MSCs that may be used as serving MSCs or the information about the current serving MSC may change after the MSC is restarted. After starting up successfully, one or more other MSCs in the MSC pool obtain the latest list of priority levels of at least two MSCs that may be used as serving MSCs or the latest information about the current serving MSC that serves the group call in the MSC pool from any BSC, the BSC specified by the OMC, or the OMC.

After the serving MSC is selected, the MSC sends an IAM message to the current serving MSC of the group call. The IAM message carries the information about the address of the current serving MSC of the group call, and the calling number in the IAM message is the number of the current serving MSC of the group call.

Specifically, after an MS roams to an area served by the MSC, the MS may be registered onto any available MSC in the MSC pool. If the MS needs to initiate a group call, the registering MSC may select a normally working serving MSC of the highest priority level as the current serving MSC in the stored list of priority levels of at least two MSCs that may be used as serving MSCs, and then the registering MSC sends an IAM message to the current serving MSC. The IAM message carries the information about the address of the current serving MSC, and the calling number in the IAM message is the number of the current serving MSC.

In the prior art, after selecting the serving MSC, the registering MSC needs to send a Send_Group_Call_Info message (Send_Group_Call_Info ) to the current serving MSC to obtain the MSC-A that serves the current group call, and then the registering MSC sends a SETUP message to the MSC-A. Afterward, according to a normal group call initiation procedure, the MSC-A notifies each MSC-R of setting up a group call, sets up a group call channel for the group call, and finally, sends a Connect message (Connect) to the MS that initiates the group call, then the MS may send voice data. In the method provided in the present invention, after selecting the serving MSC, the registering MSC does not need to send a Send_Group_Call_Info message (Send_Group_Call_Info) to the current serving MSC to obtain the MSC-A. Because the serving MSC selected by the registering MSC has the functions of the MSC-A, the registering MSC sends an IAM message to the selected current serving MSC directly to initiate a normal group call procedure, which saves steps of obtaining the MSC-A and reduces the signaling interaction between the MSCs at the time of initiating a group call in the MSC pool.

For the second setting mode, the methods provided in the foregoing embodiments let the registering MSC select the serving MSC. The serving MSC may also be selected by the BSC.

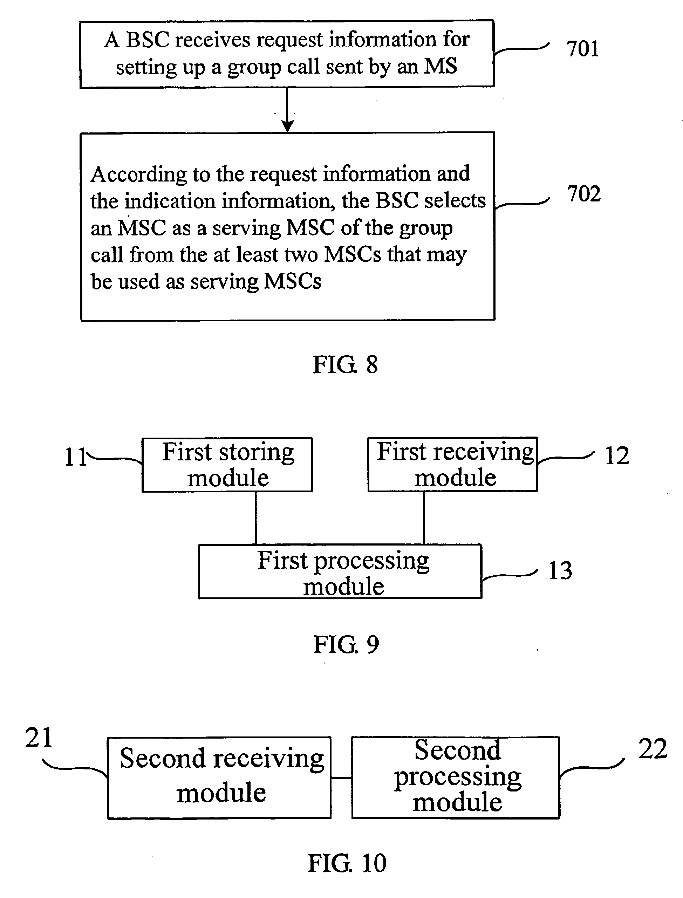

FIG. 8 is a flowchart of a group call method according to a fourth embodiment of the present invention, which includes:
701. A BSC receives request information for setting up a group call from an MS, where the BSC is located in an MSC pool area corresponding to the MSC pool. The MSC pool includes at least two MSCs that may be used as serving MSCs, and the BSC includes indication information indicating that an MSC needs to be selected as a serving MSC from at least two MSCs that may be used as serving MSCs.

702. The BSC selects an MSC as a serving MSC of the group call from the at least two MSCs that may be used as serving MSCs according to the request information and the indication information, where a GCR that is connected with any MSC in the at least two MSCs that may be used as serving MSCs stores attribute information of the group call. The attribute information is used to enable any MSC in the at least two MSCs that may be used as serving MASs to have functions of a serving MSC that serves the group call, and the serving MSC is an anchor MSC in the MSC pool or the serving MSC is a relay MSC in the MSC pool.

In group calla method provided in the fourth method embodiment of a group call of the present invention, the serving MSC in the MSC pool serves the group call. In this way, the currently selected serving MSC is never the failed MSC. Such a mode of selecting the serving MSC may improve the disaster recovery capability of the group call system based on the MSC pool.

If the currently selected serving MSC fails, the BSC may select another serving MSC except the failed serving MSC in the MSC pool to act as the serving MSC of the group call. Unlike in the prior art in which an MSC-A serves only certain group calls, every serving MSC in this embodiment of the present invention may serve group calls, and in this way, even if a serving MSC fails, one or more other serving MSCs may also serve the group calls, without waiting for recovery of the failed serving MSC.

In the fourth embodiment of the group call method of the present invention, the indication information may be a list of priority levels of at least two MSCs that may be used as serving MSCs, or may be a preset selection mechanism.

If the indication information is a list of priority levels of the at least two MSCs that maybe used as serving MSCs, the BSC selecting an MSC as a serving MSC of the group call from the at least two MSCs that may be used as serving MSCs in 702 may include the following: The BSC selects a normally working MSC of the highest priority level as the serving MSC of the group call from the list of priority levels of the at least two MSCs that may be used as serving MSCs.

If the serving MSC currently selected by the BSC for serving the group call fails, the BSC selects a normally working MSC of the highest priority level as the serving MSC of the group call from the list of priority levels of the at least two MSCs that may be used as serving MSCs.

The BSC connected with the failed serving MSC of the group call, the BSC specified by the OMC, or the OMC may send the fault information to the MSCs except the failed serving MSC of the group call in the MSC pool, so that one or more other MSCs update their respectiveve lists of priority levels of the at least two MSCs that may be used as serving MSCs; or the BSC connected with the failed serving MSC of the group call, the BSC specified by the OMC, or the OMC sends the current list of priority levels of the at least two MSCs that may be used as serving MSCs to the MSCs except the failed serving MSC of the group call in the MSC pool.

For example, any BSC connected with the failed serving MSC, the BSC specified by the OMC, or the OMC may send an MSCs_Status_Update message (MSCs_Status_Update) to the MSCs except the failed serving MSC in the MSC pool, where the MSCs_Status_Update message (MSCs_Status_Update) includes status information of the failed serving MSC, and in this way, one or more other MSCs may update their respective lists of priority levels of the at least two MSCs that may be used as serving MSCs. Alternatively, any BSC connected with the failed serving MSC, the BSC specified by the OMC, or the OMC may directly send the current list of priority levels of the at least two MSCs that may be used as serving MSCs (namely, the latest list of priority levels of the at least two MSCs that may be used as serving MSCs) to one or more other MSCs in the MSC pool. After receiving the list of priority levels of the at least two MSCs that may be used as serving MSCs, one or more other MSCs overwrite their respective lists of priority levels of the at least two MSCs that may be used as serving MSCs, thereby implementing that the list of priority levels of the at least two MSCs that may be used as serving MSCs is updated.

If the indication information is a preset selection mechanism, the BSC selecting an MSC as a serving MSC of the group call from the at least two MSCs that may be used as serving MSCs in 702 may include the following: According to the preset selection mechanism, the BSC selects an MSC as a serving MSC of the group call from the at least two MSCs that may be used as serving MSCs.

For example, three MSCs exist in the MSC pool, namely, MSC1, MSC2, and MSC3 respectively, and the BSC may select the serving MSC according to the preset selection rule. For example, the preset selection mechanism may include: selecting MSC1 as a unique serving MSC first; and, if MSC1 fails, selecting MSC3 as a unique serving MSC. The specific selection rule may be determined according to actual conditions of the network.

If the serving MSC currently selected by the BSC for the group call fails, the BSC may select a normally working MSC as a server MSC of the group call from at least two MSCs that may be used as serving MSCs according to the preset selection mechanism.

The BSC connected with the failed serving MSC of the group call, the BSC specified by the OMC, or the OMC may send the fault information to one or more other MSCs except the failed serving MSC of the group call in the MSC pool.

The BSC connected with the failed serving MSC of the group call, the BSC specified by the OMC, or the OMC may send the information about the serving MSC currently selected by the BSC for the group call to one or more other MSCs except the failed serving MSC of the group call in the MSC pool.

After the serving MSC is selected, the information about the current serving MSC may be sent to one or more other MSCs in the MSC pool. In this way, one or more other MSCs (including the serving MSCs and non-serving MSCs) in the MSC pool may know the current serving MSC. For other non-serving MSCs, the group call cannot be initiated properly unless the current serving MSC is known.

In the MSC pool, the list of priority levels of at least two MSCs that may be used as serving MSCs or the information about the current serving MSC may change after the MSC is restarted. After starting up successfully, one or more other MSCs in the MSC pool obtain the latest list of priority levels of at least two MSCs that may be used as serving MSCs or the latest information about the current serving MSC that serves the group call in the MSC pool from any BSC, the BSC specified by the OMC, or the OMC.

The BSC, which has received the request information for setting up a group call from the MS, parses a SAMB frame sent by the MS to obtain a layer-3 message. With the layer-3 message being the layer-3 message related to the group call, the layer-3 message is sent to the current serving MSC of the group call. If the serving MSC finds that another serving MSC of a higher priority level exists, the layer-3 message is sent to the one or more other serving MSC of higher priority level.

Specifically, after an MS roams to an area served by the MSC pool, the MS may be registered onto any available MSC in the MSC pool. When receiving a SAMB frame sent by the MS, any BSC connected with the registering MSC parses the frame to obtain the layer-3 message, and, according to this message, the BSC may judge that the MS needs to initiate a group call. The BSC selects a serving MSC, and sends the layer-3 message to the current serving MSC.

In a normal case, the BSC may acquire the status information of each MSC in the MSC pool, and may keep updating the status information of each MSC in the MSC pool synchronously. However, sometimes, the BSC may be disconnected from the MSC. Although a certain serving MSC such as MSC1 works normally, and the priority level of MSC1 is the highest currently, due to disconnection between the BSC and MSC1, the BSC will not select MSC1 as the currently serving MSC, but select another serving MSC in the MSC pool, for example, MSC2 may be selected. The current priority level of MSC2 from the list of priority levels of at least two MSCs that may be used as serving MSCs is lower than the priority level of the MSC. To ensure that the priority level of the current serving MSC is the highest, if MSC2 finds that another serving MSC of higher priority exist after receiving the layer-3 message sent by the BSC, MSC2 sends the layer-3 message to the other serving MSC of higher priority. For example, MSC2 finds that MSC1 has higher priority, and therefore, after receiving the layer-3 message, MSC2 sends the layer-3 message to MSC1, so that MSC1 becomes the current serving MSC.

In the embodiment of the present invention, the layer-3 message may be an uplink preemption message, or a group call advice message, or a group call release message.
FIG 9 is a schematic structure diagram of an MSC according to a first embodiment of the present invention. The MSC includes a first storing module 11, a first receiving module 12, and a first processing module 13. The first processing module 13 is respectively connected with the first storing module 11 and the first receiving module 12. The first storing module 11 is configured to store indication information indicating that an MSC needs to be selected as a serving MSC from at least two MSCs that may be used as serving MSCs; the first receiving module 12 receives request information for setting up a group call sent by the MS; the first processing module 13 is configured to select an MSC as a serving MSC of the group call from the at least two MSCs that may be used as serving MSCs according to the request information received by the first receiving module 12 and the indication information that is stored in the first storing module 11 and indicates that an MSC needs to be selected as a serving MSC from the at least two MSCs that may be used as serving MSCs, where the serving MSC is an anchor MSC in an MSC pool or the serving MSC is a relay MSC in the MSC pool.

If the indication information stored in the first storing module is a list of priority levels of the at least two MSCs that may be used as serving MSCs, the first storing module 11 may be specifically configured to store the list of priority levels of the at least two MSCs that may be used as serving MSCs. The first processing module 13 may be specifically configured to select a normally working MSC of the highest priority level as a serving MSC of the group call from the list of at least two MSCs that may be used as serving MSCs according to the request information received by the first receiving module 12 and the list of priority levels of the at least two MSCs that may be used as serving MSCs stored in the first storing module 11.

The first processing module 13 may further be configured to select a normally working MSC of the highest priority level as the serving MSC of the group call from the list of priority levels of the at least two MSCs that may be used as serving MSCs in a case of that the currently selected serving MSC of the group call fails.

In a case of that the indication information stored in the first storing module is a preset selection mechanism, the first storing module 11 may be specifically configured to store the preset selection mechanism that instruct to select an MSC as a serving MSC from at least two MSCs that may be used as serving MSCs. The first processing module 13 may be specifically configured to select an MSC as a serving MSC of the group call from the at least two MSCs that may be used as serving MSCs according to the request information received by the first receiving module 12 and the indication information stored in the first storing module 11.

The first processing module 13 may further be configured to select a normally working MSC as a servering MSC of the group call from at least two MSCs that may be used as serving MSCs according to the preset selection mechanism in a case of that the currently selected serving MSC of the group call fails.

The MSC shown in FIG. 9 may further include a first sending module, which is configured to send an IAM message to the current serving MSC of the group call selected by the first processing module, where the IAM message carries the information about the address of the current serving MSC of the group call, and the calling number in the IAM message is the number of the current serving MSC of the group call.

FIG. 10 is a schematic structure diagram of an MSC according to a second embodiment of the present invention. The MSC includes: a second receiving module 21 and a second processing module 22, where the second processing module 22 is connected with the second receiving module 21. The second receiving module 21 is configured to receive request information for setting up a group call sent by the MS; and the second processing module 22 is configured to serve the group call according to the request information received by the second receiving module 21.

The MSC shown in FIG. 10 may further include a second sending module, which is configured to send the attribute information of the group call to one or more other MSCs except this MSC itself in the MSC pool, so that the GCRs connected with one or more other MSCs update the attribute information related to the group call.

The second sending module may be configured to send the attribute information of the group call to the BSC or OMC connected to the MSC itself, so that the BSC or OMC sends the attribute information of the group call to one or more other MSCs except this MSC itself in the MSC pool and that the GCRs connected with one or more other MSCs update the attribute information related to the group call.

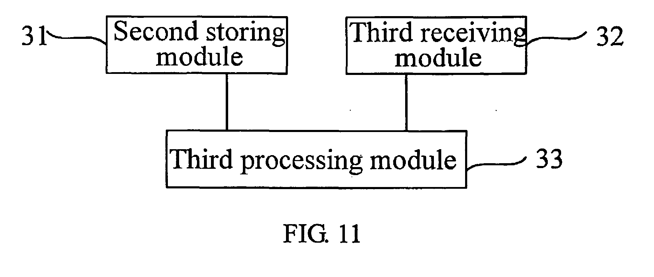

FIG. 11 is a schematic structure diagram of a BSC according to an embodiment of the present invention. The BSC includes: a second storing module 31, a third receiving module 32, and a third processing module 33. The third processing module 33 is connected with the second storing module 31 and the third receiving module 32. The second storing module 31 is configured to store indication information indicating that an MSC needs to be selected as a serving MSC from at least two MSCs that may be used as serving MSCs; the third receiving module 32 is configured to receive request information for setting up a group call sent by the MS; the third processing module 33 is configured to select an MSC as a serving MSC of the group call from the at least two MSCs that may be used as serving MSCs according to the request information received by the third receiving module 32 and the indication information that is stored in the second storing module 31 and indicates that an MSC needs to be selected as a serving MSC from the at least two MSCs that may be used as serving MSCs, where the serving MSC is an anchor MSC in an MSC pool or the serving MSC is a relay MSC in the MSC pool.

In a case of that the indication information stored in the second storing module is a list of priority levels of the at least two MSCs that may be used as serving MSCs, the second storing module 31 may be configured to store the list of priority levels of the at least two MSCs that may be used as serving MSCs; and the third processing module 33 may be configured to select a normally working MSC of the highest priority level as a serving MSC of the group call from the list of at least two MSCs that may be used as serving MSCs according to the request information received by the third receiving module 32 and the list of priority levels of the at least two MSCs that may be used as serving MSCs stored in the second storing module 31.

The third processing module 33 may further be configured to select a normally working MSC of the highest priority level as the serving MSC of the group call from the list of priority levels of the at least two MSCs that may be used as serving MSCs in a case of that the currently selected serving MSC of the group call fails.

In a case of that the indication information stored in the second storing module is a preset selection mechanism, the second storing module 31 may be configured to store the preset selection mechanism that instructs to select an MSC as a serving MSC from at least two MSCs that may be used as serving MSCs; and the third processing module 33 is configured to select an MSC as a serving MSC of the group call from the at least two MSCs that may be used as serving MSCs according to the request information received by the third receiving module 32 and the indication information stored in the second storing module 31.

The third processing module 33 may further be configured to select a normally working MSC as a server MSC of the group call from at least two MSCs that may be used as serving MSCs according to the preset selection mechanism in a case of that the currently selected serving MSC of the group call fails.

An embodiment of the present invention further provides another communication system, which may include an MSC shown in FIG 9 or FIG. 10.

If the communication system includes the MSC shown in FIG. 10, each MSC in the communication system is respectively connected with each GCR, and each GCR stores attribute information of the group call. The attribute information is used to enable any MSC to have functions of a serving MSC that serves the group call.

An embodiment of the present invention further provides a communication system, which may include a BSC shown in FIG. 11.

An embodiment of the present invention further provides a communication system, which includes at least two MSCs and at least two GCRs. Each MSC in the at least two MSCs is connected with a GCR in the at least two GCRs respectively; each GCR of the at least two GCRs stores attribute information of the group call; the attribute information is used to enable to any MSC in the at least two MSCs to have functions of a serving MSC that serves the group call, and the serving MSC is an anchor MSC in an MSC pool or the serving MSC is a relay MSC in the MSC pool.

In all embodiments of the present invention, each MSC in the MSC pool has functions of a serving MSC that serves the group call, or the MSC pool includes at least two MSCs that may be used as serving MSCs; and the MS may initiate a group call through any MSC in the MSC pool or through one of the at least two MSCs that may be used as serving MSCs. In this way, if the serving MSC that currently serves the group call fails, the group call may also be performed through one or more other MSCs in the MSC pool, thereby improving the disaster recovery capability of the group call system based on the MSC pool.

At the time of selecting the MSC for serving the group call initiated by the MS, the selection may be based on a load sharing mechanism, thereby implementing that the load is balanced between the MSCs in the MSC pool.

Besides, because the functions of the registering MSC and the serving MSC are implemented on one MSC, the step of the registering MSC selecting a serving MSC through a table of mapping between the LAC and the MSC involved in the prior art is omitted, thereby reducing signaling interaction between the MSCs when the MSC pool initiates a group call.

Persons of ordinary skill in the art may understand that the methods in the embodiments of the present invention may be implemented in different ways. For example, such methods may be implemented by using a mode of combining hardware, software, or both hardware and software. When the program instructions are run, the methods according to the embodiments of the present invention are performed. In a mode of using hardware, one or more processing modules in the embodiments of the present invention may be implemented in one or more circuit modules. The circuit modules may be application specific integrated circuits (Application Specific Integrated Circuits, ASICs), digital signal processors (Digital Signal Processors, DSPs), digital signal processing devices (Digital Signal Processing Devices, DSPDs), Programmable Logic Devices (PLDs), field programmable gate arrays (Field Programmable Gate Arrays, FPGAs), processors, controllers, microprocessors, microcontrollers, or other electronic devices designed for performing the methods in the embodiments of the present invention.

In a mode of using software, the methods in the embodiments of the present invention may be implemented by using one or more modules, for example, the methods may be implemented in a modularized mode based on processes or functions. Such program instructions may be executed in any computer-readable or machine-readable media. For example, the readable media may be any media capable of storing program codes, such as a memory, a ROM, a RAM, a magnetic disk, or an optical disk. The memory may be located in a processor, and may also be located outside the processor. The memory here refers to any type of long-term memory, short-term memory, erasable memory, non-erasable memory, or other types of memory.

Finally, it should be noted that, the above embodiments are merely provided for describing the technical solutions of the present invention, but not intended to limit the present invention. It should be understood by persons of ordinary skill in the art that, although the present invention has been illustrated in detail with reference to the exemplary embodiments, modifications and equivalent replacements may still be made to the technical solution of the present invention, and these modifications and equivalent replacements do not cause the modified technical solution to depart from the scope of the technical solution of the present invention.

## Claims

1. A group call method comprising:
receiving (101), by a mobile switching center, MSC, request information for setting up a group call sent by a mobile station, MS, wherein the MSC forms part of an MSC pool and is an MSC that is selected by a base station controller, BSC, from any MSC that works normally in the MSC pool; and
serving (102), by the MSC, the group call according to the request information, wherein the MSC is connected with a group call register, GCR, which comprises attribute information of the group call, and the attribute information comprises a list of MSCs in the MSC pool and the list of MSCs indicates that any MSC in the MSC pool may serve as a serving MSC for serving the group call as an anchor MSC in the MSC pool or a relay MSC in the MSC pool;wherein the method further comprises:
sending (201), by the MSC, the attribute information of the group call to one or more other MSCs except the MSC itself in the MSC pool, so that GCRs connected with the one or more other MSCs update the attribute information of the group call.

2. The method according to claim 1, wherein: the sending, by the MSC, the attribute information of the group call to the one or more other MSCs except the MSC itself in the MSC pool, comprises:
sending (301, 401), by the MSC, the attribute information of the group call to the BSC or an operation & maintenance center, OMC, connected with the MSC itself, so that the BSC or OMC sends the attribute information of the group call to the one or more other MSCs except the MSC itself in the MSC pool.

3. The method according to claim 1 or 2, wherein:
the attribute information of the group call comprises basic attribute information of the group call and dynamic attribute information generated in a period of the group call; or
the attribute information of the group call is dynamic attribute information generated in the period of the group call.

4. The method according to any one of claims 1 to 3, wherein the MSC selected by the BSC is selected based on a load sharing mechanism.

5. A mobile switching center, MSC, comprising:
a second receiving module (21), configured to receive request information for setting up a group call sent by a mobile station MS; and
a second processing module (22), configured to serve the group call according to the request information received by the second receiving module;
wherein the MSC is for an MSC pool and is configured to be selected by a base station controller, BSC, from any MSC that works normally in the MSC pool;
wherein the MSC is configured to be connected with a group call register, GCR, which comprises attribute information of the group call, and the attribute information comprises a list of MSCs in the MSC pool and the list of MSCs indicates that any MSC for the MSC pool may serve as a serving MSC for serving the group call as an anchor MSC for the MSC pool or a relay MSC for the MSC pool;
further comprising:
a second sending module, configured to send the attribute information of the group call to one or more other MSCs except the MSC itself in the MSC pool, so that group call registers, GCRs, connected with the one or more other MSCs update the attribute information of the group call.

6. The MSC according to claim 5, wherein:
the second sending module is configured to send the attribute information of the group call to the BSC, or an operation & maintenance center, OMC, connected to the MSC itself, so that the BSC or OMC sends the attribute information of the group call to the one or more other MSCs except the MSC itself in the MSC pool and that the GCRs connected with one or more other MSCs update the attribute information of the group call.

7. A communication system comprising at least two MSC of any one of the claims 5 and 6 and at least two group call registers, GCRs, wherein each MSC in the at least two MSCs is connected with a GCR in the at least two GCRs respectively.

## Patentansprüche

1. Gruppenrufverfahren, das Folgendes umfasst:
Empfangen (101) von Anforderungsinformationen zum Einrichten eines durch eine Mobilstation, MS, gesendeten Gruppenrufs durch eine Mobilfunkvermittlungsstelle, MSC, wobei die MSC einen Teil eines MSC-Pools bildet und eine MSC ist, die durch eine Basisstationssteuerung, BSC, aus beliebigen MSCs, die im MSC-Pool normal arbeiten, ausgewählt wird; und
Bedienen (102) des Gruppenrufs gemäß den Anforderungsinformationen durch die MSC, wobei die MSC mit einem Gruppenrufregister, GCR, das Attributinformationen des Gruppenrufs umfasst, verbunden ist und die Attributinformationen eine Liste von MSCs im MSC-Pool umfassen und die Liste von MSCs angibt, dass eine beliebige MSC im MSC-Pool als "Serving MSC" zum Bedienen des Gruppenrufs als "Anchor MSC" im MSC-Pool oder "Relay MSC" im MSC-Pool dienen kann; wobei das Verfahren ferner Folgendes umfasst:
Senden (201) der Attributinformationen des Gruppenrufs durch die MSC an eine oder mehrere andere MSCs mit Ausnahme der MSC selbst im MSC-Pool, sodass mit der einen oder den mehreren anderen MSCs verbundene GCRs die Attributinformationen des Gruppenrufs aktualisieren.

2. Verfahren nach Anspruch 1, wobei: das Senden der Attributinformationen des Gruppenrufs durch die MSC an die eine oder mehreren anderen MSCs mit Ausnahme der MSC selbst im MSC-Pool Folgendes umfasst:
Senden (301, 401) der Attributinformationen des Gruppenrufs durch die MSC an die BSC oder eine Betriebs- & Wartungszentrale, OMC, die mit der MSC selbst verbunden ist, sodass die BSC oder die OMC die Attributinformationen des Gruppenrufs an die eine oder mehreren anderen MSCs mit Ausnahme der MSC selbst im MSC-Pool sendet.

3. Verfahren nach Anspruch 1 oder 2, wobei:
die Attributinformationen des Gruppenrufs allgemeine Attributinformationen des Gruppenrufs und dynamische Attributinformationen, die in einem Zeitraum des Gruppenrufs generiert werden, umfassen; oder
die Attributinformationen des Gruppenrufs dynamische Attributinformationen sind, die im Zeitraum des Gruppenrufs generiert werden.

4. Verfahren nach einem der Ansprüche 1 bis 3, wobei die durch die BSC ausgewählte MSC basierend auf einem Lastverteilungsmechanismus ausgewählt wird.

5. Mobilfunkvermittlungsstelle, MSC, die Folgendes umfasst:
ein zweites Empfangsmodul (21), das konfiguriert ist, um Anforderungsinformationen zum Einrichten eines durch eine Mobilstation MS gesendeten Gruppenrufs zu empfangen; und
ein zweites Verarbeitungsmodul (22), das konfiguriert ist, um den Gruppenruf gemäß den durch das zweite Empfangsmodul empfangenen Anforderungsinformationen zu bedienen;
wobei die MSC für einen MSC-Pool ist und konfiguriert ist, um durch eine Basisstationssteuerung, BSC, aus beliebigen MSCs, die im MSC-Pool normal arbeiten, ausgewählt zu werden;
wobei die MSC konfiguriert ist, um mit einem Gruppenrufregister, GCR, das Attributinformationen des Gruppenrufs umfasst, verbunden zu werden, und die Attributinformationen eine Liste von MSCs im MSC-Pool umfassen und die Liste von MSCs angibt, dass eine beliebige MSC für den MSC-Pool als "Serving MSC" zum Bedienen des Gruppenrufs als "Anchor MSC" für den MSC-Pool oder "Relay MSC" für den MSC-Pool dienen kann;
ferner umfassend:
ein zweites Sendemodul, das konfiguriert ist, um die Attributinformationen des Gruppenrufs an eine oder mehrere andere MSCs mit Ausnahme der MSC selbst im MSC-Pool zu senden, sodass mit der einen oder den mehreren anderen MSCs verbundene Gruppenrufregister, GCRs, die Attributinformationen des Gruppenrufs aktualisieren.

6. MSC nach Anspruch 5, wobei:
das zweite Sendemodul konfiguriert ist, um die Attributinformationen des Gruppenrufs an die BSC oder eine Betriebs- & Wartungszentrale, OMC, die mit der MSC selbst verbunden ist, zu senden, sodass die BSC oder die OMC die Attributinformationen des Gruppenrufs an die eine oder mehreren anderen MSCs mit Ausnahme der MSC selbst im MSC-Pool sendet und sodass die mit einer oder mehreren anderen MSCs verbundenen GCRs die Attributinformationen des Gruppenrufs aktualisieren.

7. Kommunikationssystem, das mindestens zwei MSCs nach einem der Ansprüche 5 und 6 und mindestens zwei Gruppenrufregister, GCRs, umfasst, wobei jede MSC in den mindestens zwei MSCs mit einem GCR jeweils in den mindestens zwei GCRs verbunden ist.

## Revendications

1. Procédé d'appel de groupe, comprenant les étapes suivantes :
recevoir (101), par un centre de commutation mobile, MSC, des informations de demande pour configurer un appel de groupe envoyé par une station mobile, MS, où le MSC fait partie d'un ensemble de MSC, et est un MSC qui est sélectionné par un contrôleur de station de base, BSC, parmi tout MSC qui opère normalement dans l'ensemble de MSC ; et
servir (102), par le MSC, l'appel de groupe conformément aux informations de demande, où le MSC est connecté avec un registre d'appel de groupe, GCR, qui comprend des informations d'attribut de l'appel de groupe, et les informations d'attribut comprennent une liste de MSC dans l'ensemble de MSC, et la liste de MSC indique que tout MSC dans l'ensemble de MSC peut servir de MSC de desserte pour servir l'appel de groupe comme MSC d'ancrage dans l'ensemble de MSC ou MSC relais dans l'ensemble de MSC ; où le procédé comprend en outre l'étape suivante :
envoyer (201), par le MSC, les informations d'attribut de l'appel de groupe à un ou plusieurs autres MSC à l'exception du MSC lui-même dans l'ensemble de MSC, de sorte que les GCR connectés à l'un ou à la pluralité d'autres MSC mettent à jour les informations d'attribut de l'appel de groupe.

2. Procédé selon la revendication 1, dans lequel : l'envoi, par le MSC, des informations d'attribut de l'appel de groupe à l'un ou à la pluralité d'autres MSC à l'exception du MSC lui-même dans l'ensemble de MSC comprend l'étape suivante : envoyer (301, 401), par le MSC, les informations d'attribut de l'appel de groupe au BSC ou à un centre d'exploitation et de maintenance, OMC, connecté au MSC lui-même, de sorte que le BSC ou l'OMC envoie les informations d'attribut de l'appel de groupe à l'un ou à la pluralité d'autres MSC à l'exception du MSC lui-même dans l'ensemble de MSC.

3. Procédé selon la revendication 1 ou la revendication 2, dans lequel :
les informations d'attribut de l'appel de groupe comprennent des informations d'attribut de base de l'appel de groupe et des informations d'attribut dynamiques générées dans une période de l'appel de groupe ; ou
les informations d'attribut de l'appel de groupe sont des informations d'attribut dynamiques générées dans la période de l'appel de groupe.

4. Procédé selon l'une quelconque des revendications 1 à 3, dans lequel le MSC sélectionné par le BSC est sélectionné sur la base d'un mécanisme de partage de charge.

5. Centre de commutation mobile, MSC, comprenant :
un second module de réception (21), configuré pour recevoir des informations de demande pour configurer un appel de groupe envoyé par une station mobile, MS ; et
un second module de traitement (22), configuré pour servir l'appel de groupe conformément aux informations de demande reçues par le second module de réception ;
où le MSC est pour un ensemble de MSC et est configuré pour être sélectionné par un contrôleur de station de base, BSC, parmi tout MSC qui opère normalement dans l'ensemble de MSC ;
où le MSC est configuré pour être connecté avec un registre d'appel de groupe, GCR, qui comprend des informations d'attribut de l'appel de groupe, et les informations d'attribut comprennent une liste de MSC dans l'ensemble de MSC, et la liste de MSC indique que tout MSC pour l'ensemble de MSC peut servir de MSC de desserte pour servir l'appel de groupe comme MSC d'ancrage pour l'ensemble de MSC ou MSC relais pour l'ensemble de MSC ;
comprenant en outre :
un second module d'envoi, configuré pour envoyer les informations d'attribut de l'appel de groupe à un ou plusieurs autres MSC à l'exception du MSC lui-même dans l'ensemble de MSC, de sorte que les registres d'appel de groupe, GCR, connectés à l'un ou à la pluralité d'autres MSC mettent à jour les informations d'attribut de l'appel de groupe.

6. MSC selon la revendication 5, dans lequel :
le second module d'envoi est configuré pour envoyer les informations d'attribut de l'appel de groupe au BSC, ou à un centre d'exploitation et de maintenance, OMC, connecté au MSC lui-même, de sorte que le BSC ou l'OMC envoie les informations d'attribut de l'appel de groupe à l'un ou à la pluralité d'autres MSC à l'exception du MSC lui-même dans l'ensemble de MSC, et que les GCR connectés à l'un ou à la pluralité d'autres MSC mettent à jour les informations d'attribut de l'appel de groupe.

7. Système de communication comprenant au moins deux MSC de l'une quelconque des revendications 5 et 6 et au moins deux registres d'appel de groupe, GCR, où chaque MSC dans les au moins deux MSC est connecté à un GCR dans les au moins deux GCR, respectivement.
